# EUROPEAN PATENT SPECIFICATION

(11) **EP 1 312 494 B1**
(45) Date of publication and mention of the grant of the patent: **11.01.2006**
(21) Application number: 02257958.5
(22) Date of filing: 19.11.2002
(51) Int. Cl.: B60H 1/00

(54) **Automotive air conditioner with flexible plate-like member for controlling flow of air therein**
Fahrzeug-Klimaanlage mit flexiblem, plattenartigem Stellglied zur Regelung eines Luftstroms
Appareil de climatisation d'un véhicule comprenant un membre de régulation en forme de plaque pour contrôler un flux d'air

(30) Priority: 19.11.2001 JP 2001352935; 19.11.2001 JP 2001352999; 21.11.2001 JP 2001355876; 21.11.2001 JP 2001355877
(43) Date of publication of application: 21.05.2003
(73) Proprietor: Sanden Corporation, Isesaki-shi, Gunma 372-8502 (JP)
(72) Inventor: Masuda, Kenji, c/o Sanden Corporation, Isesaki-shi, Gunma 372-8502 (JP); Uehara, Shingo, c/o Sanden Corporation, Isesaki-shi, Gunma 372-8502 (JP); Sakurai, Hirotaka, c/o Sanden Corporation, Isesaki-shi, Gunma 372-8502 (JP)
(74) Representative: Haley, Stephen

(56) References cited:
- FR-A- 2 761 011
- PATENT ABSTRACTS OF JAPAN vol. 012, no. 448 (M-768), 24 November 1988 (1988-11-24) & JP 63 180512 A (NIPPON DENSO CO LTD), 25 July 1988 (1988-07-25)
- PATENT ABSTRACTS OF JAPAN vol. 012, no. 437 (M-765), 17 November 1988 (1988-11-17) & JP 63 170118 A (NIPPON DENSO CO LTD), 14 July 1988 (1988-07-14)

## Description

The present invention relates to an automotive air conditioner and, in particular, relates to a control of the flow of air in the air conditioner.

The air conditioner of this type is installed in a limited narrow region in an automobile, and thus there has been a demand for reducing the size thereof as much as possible. For satisfying the demand for reduction in size of the air conditioner, various apparatuses are mounted in a relatively small-sized duct defining therein a space for allowing the flow of air therethrough. Normally, the space in the duct is divided into a plurality of air flow passages. In those air flow passages, for example, a cooler and a heater are disposed, respectively, thereby to adjust the state of the air passing through the space. On the downstream side, the duct is divided into a plurality of air outlets. The air of which the state has been adjusted by the cooler or heater is blown out of those air outlets. The apparatuses mounted in the duct include a damper for adjusting the ratio of the amounts of air passing through the air flow passages, and a damper for adjusting the ratio of the amounts of air blown out of the air outlets. Each of these dampers is made of a rigid body plate and pivoted about one end thereof in the space of the duct.

For pivoting such dampers, however, it is necessary to secure a relatively large space in the duct, which has been a big obstacle to reduction in size of the duct, and thus reduction in size of the air conditioner.

For example, JP-A-9-99725 discloses a structure wherein a slide-type door or a rotary-type door is used instead of a damper. Inasmuch as the slide-type door or the rotary-type door has a rigid body structure, however, there is no flexibility in moving manner and moving direction, thereby to largely limit the degree of freedom for designing an air conditioner. Further, the slide-type door requires a large space for sliding movement thereof, while the rotary-type door requires a large space for installation thereof, which are therefore disadvantageous in view of reducing the size of an air conditioner.

JP-A-63-180512 discloses an automotive air conditioner according to the preamble of claim 1.

It is therefore an object of the present invention to provide an automotive air conditioner that achieves a control of the flow of air in the air conditioner with a structure that gives a large degree of designing freedom and that is advantageous in size reduction.

It is another object of the present invention to provide the foregoing automotive air conditioner that achieves, with a simple structure, a mechanism for adjusting the ratio of the amounts of air passing through air flow passages in a duct.

It is still another object of the present invention to provide the foregoing automotive air conditioner that achieves, with a simple structure, a mechanism for adjusting the degree of opening of each of air outlets of a duct.

Other objects of the present invention will become clear as the description proceeds.

Accordingly, the invention resides in an automotive air conditioner comprising a duct defining therein a space extending in a first direction for allowing the flow of air therethrough, a guide fixed to said duct and extending in a second direction crossing said first direction, and a movable plate-like member that is guided by said guide and influences the flow of air in said space, wherein said plate-like member has flexibility in said first direction, wherein said plate-like member has a first and a second surface confronting each other in said first direction, said first surface has a substantially flat shape, while said second surface has a plurality of crest portions extending in said third direction crossing said first and second directions and arranged at intervals therebetween in said second direction and wherein said plate-like member has flexibility at portions between said crest portions, characterised in that said automotive air conditioner further comprises a driving apparatus for moving said plate-like member in said second direction, said driving apparatus comprising:
concave portions and convex portions formed by said crest portions of said plate-like member confronting each other in said first direction, said concave portions and said convex portions regularly adjoining each other in said second direction; and
a gear engaging with said concave portions and said convex portions and sending said concave portions and said convex portions in said second direction upon rotation thereof.

### In the Drawings:

The present invention will be understood more fully from the detailed description given herein below, taken in conjunction with the accompanying drawings, in which:
Fig. 1 is a schematic sectional view of an automotive air conditioner according to a first embodiment of the present invention;
Fig. 2 is a perspective view of a plate-like member used in the air conditioner of Fig. 1;
Fig. 3 is a schematic partial sectional view showing one operating state of an air flow amount ratio adjusting portion of the air conditioner of Fig. 1;
Fig. 4 is a schematic partial sectional view showing another operating state of the air flow amount ratio adjusting portion of the air conditioner of Fig. 1;
Fig. 5 is a schematic partial sectional view showing still another operating state of the air flow amount ratio adjusting portion of the air conditioner of Fig. 1;
Fig. 6 is a schematic sectional view of an automotive air conditioner according to a second embodiment of the present invention;
Fig. 7 is a perspective view of a plate-like member used in the air conditioner of Fig. 6;
Fig. 8 is a perspective view of an air outlet control plate-like member used in the air conditioner of Fig. 6;
Fig. 9 is a schematic partial sectional view showing an operating state of the plate-like member in a VENT mode of the air conditioner of Fig. 6;
Fig. 10 is a schematic partial sectional view showing an operating state of the plate-like member in a BILEVEL mode of the air conditioner of Fig. 6;
Fig. 11 is a schematic partial sectional view showing an operating state of the plate-like member in a FOOT mode of the air conditioner of Fig. 6;
Fig. 12 is a schematic partial sectional view showing an operating state of the plate-like member in a DEF-FOOT mode of the air conditioner of Fig. 6;
Fig. 13 is a schematic partial sectional view showing an operating state of the plate-like member in a DEF mode of the air conditioner of Fig. 6;
Fig. 14 is a schematic sectional view of an automotive air conditioner according to a third embodiment of the present invention;
Fig. 15 is a perspective view of an air flow amount ratio adjusting plate-like member used in the air conditioner of Fig. 14;
Fig. 16 is a perspective view of an air outlet control plate-like member used in the air conditioner of Fig. 14;
Fig. 17 is a structural diagram of plate-like member driving means used in the air conditioner of Fig. 14;
Fig. 18 is a structural diagram of a first modification of the plate-like member driving means;
Fig. 19 is a structural diagram of a second modification of the plate-like member driving means;
Fig. 20 is a structural diagram of a third modification of the plate-like member driving means;
Fig. 21 is a schematic partial sectional view showing one operating state of an air flow amount ratio adjusting portion of the air conditioner of Fig. 14;
Fig. 22 is a schematic partial sectional view showing another operating state of the air flow amount ratio adjusting portion of the air conditioner of Fig. 14;
Fig. 23 is a schematic partial sectional view showing still another operating state of the air flow amount ratio adjusting portion of the air conditioner of Fig. 14;
Fig. 24 is a schematic partial sectional view showing an operating state of an air outlet control portion in a VENT mode of the air conditioner of Fig. 14;
Fig. 25 is a schematic partial sectional view showing an operating state of the air outlet control portion in a BILEVEL mode of the air conditioner of Fig. 14;
Fig. 26 is a schematic partial sectional view showing an operating state of the air outlet control portion in a FOOT mode of the air conditioner of Fig. 14;
Fig. 27 is a schematic partial sectional view showing an operating state of the air outlet control portion in a DEF-FOOT mode of the air conditioner of Fig. 14; and
Fig. 28 is a schematic partial sectional view showing an operating state of the air outlet control portion in a DEF mode of the air conditioner of Fig. 14.

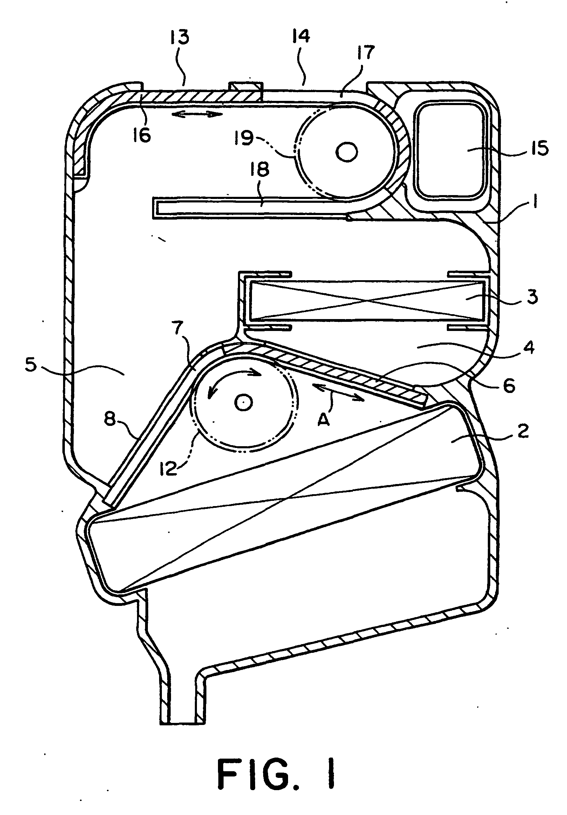

Referring to Figs. 1 to 5, an automotive air conditioner according to a first embodiment of the present invention will be described.

In Fig. 1, a duct 1 defines therein a space extending in a first direction that is approximately directed from lower to upper in the figure. In the duct 1, an evaporator 2 as a cooler and a heater 3 are disposed in order in the first direction, i.e. in the air flow direction. Between the evaporator 2 and the heater 3, a hot air passage 4 for allowing the air having passed through the evaporator 2 to pass through the heater 3, and a cool air passage 5 for allowing the air having passed through the evaporator 2 to pass therethrough bypassing the heater 3 are formed in a bifurcate fashion. The hot air passage 4 and the cool air passage 5 are arranged in parallel with each other in a second direction (lateral direction in Fig. 1) that crosses the first direction or is orthogonal thereto.

Between the evaporator 2 and the heater 3, a first plate-like member 6 is provided as air flow amount ratio adjusting means for adjusting the ratio of the amounts of air passing through the two air flow passages, i.e. the hot air passage 4 and the cool air passage 5, respectively. The first plate-like member 6 is provided so as to be movable approximately in the second direction, more specifically, in a direction designated by arrows A (hereinafter referred to as "moving direction A"). The first plate-like member 6 is guided along a pair of guide paths 8 each in the form of a groove and having a curved portion 7. The guide paths 8 are provided on both sides of the first plate-like member 6 in a third direction (direction perpendicular to the paper surface on which Fig. 1 is drawn) that crosses the first and second directions or is orthogonal thereto.

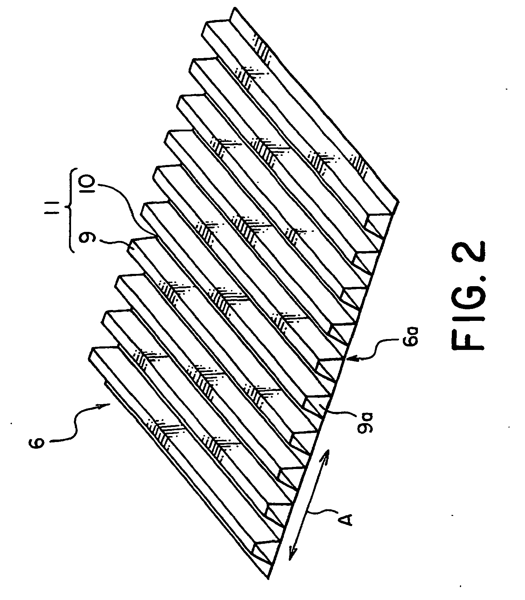

The first plate-like member 6 is made of resin having flexibility and formed into the shape as shown in Fig. 2. Accordingly, the first plate-like member 6 is given flexibility or softness about axes each extending in the third direction. In other words, it may also be said that the first plate-like member 6 has softness in the moving direction A. This state is called here "The first plate-like member 6 has flexibility in the first direction.".

The first plate-like member 6 has one surface 6a (the underside of Fig. 2) that is substantially formed into a flat shape, and the other surface formed into a concave-convex shape 11. In the concave-convex shape 11, a number of crest portions 9 and a number of valley portions 10 each extending in the third direction are alternately and regularly formed. In other words, the crest portions 9 are formed at regular intervals therebetween in the second direction, i.e. in the moving direction A. The first plate-like member 6 has flexibility at portions between the crest portions 9, i.e. portions corresponding to the valley portions 10. Inasmuch as the concave-convex shape 11 is regularly configured, it can engage with a gear or a gear-like member. Further, each crest portion 9 is formed into a hollow structure having a hollow portion 9a, thereby to reduce the weight of the first plate-like member 6. In this manner, the first plate-like member 6 is structurally given rigidity in the second and third directions by the concave-convex surface.

The first plate-like member 6 is disposed so as to be movable along the guide paths 8 as shown in Fig. 1, with the surface formed into the concave-convex shape 11 being directed toward the side of the evaporator 2 and with the surface 6a formed into the flat shape being directed toward the side of the heater 3. For example, gears 12 engaging with the concave-convex shape 11 of the first plate-like member 6 are provided in positions corresponding to the curved portions 7 of the guide paths 8. By rotating the gears 12, the first plate-like member 6 can be moved by a desired displacement amount in the moving direction A. In this event, the first plate-like member 6 moves such that both sides thereof in the third direction slide along the guide paths 8.

In the duct 1, a DEF air outlet 13, a VENT air outlet 14 and a FOOT air outlet 15 are formed downstream of the heater 3. Opening degree control for the air outlets 13,14 and 15 is performed by a second movable plate-like member 16 having a structure like that of the foregoing first plate-like member 6. The second plate-like member 16 has an opening 17 and is moved along guide paths 18 provided on both sides thereof in its width direction, thereby to select the target air outlet/outlets. Movement of the second plate-like member 16 can also be controlled by rotation of gears 19 engaging with the concave-convex shape formed on one surface of the second plate-like member 16.

In this automotive air conditioner, since the first plate-like member 6 has flexibility in the first direction, the guide path 8 can be formed into a substantially freely curved shape, so that the degree of designing freedom is large. As shown in Fig. 1, if the guide path 8 is formed into the shape having the curved portion 7, even when a space between the evaporator 2 and the heater 3 is relatively narrow, it is possible to dispose the first plate-like member 6 so as to be movable by the predetermined displacement amount within that narrow space, without extending the duct 1. Therefore, the space for the pivoting movement of the conventional rotary-type damper is not required, so that the relevant portion is reduced in size to make it possible to reduce the size of the duct 1 and thus the size of the whole automotive air conditioner.

Further, since the first plate-like member 6 is given rigidity in the second and third directions by the concave-convex shape 11, even when the first plate-like member 6 is moved and applied with air pressure, the predetermined air flow amount control function is exhibited while preventing unnecessary deformation. Thus, it is possible to satisfy the demand for size reduction while ensuring the target air flow amount ratio adjusting function.

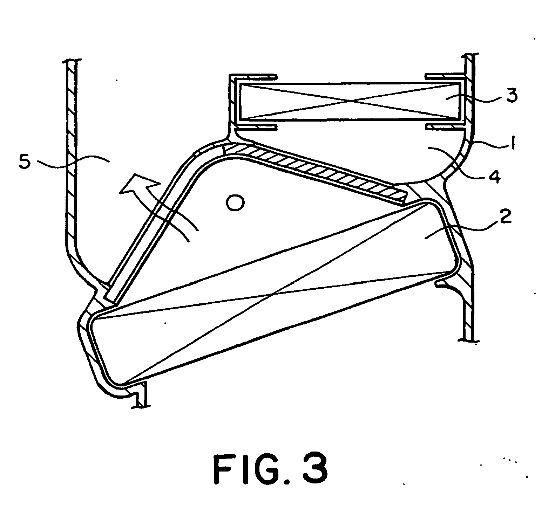

More specifically, this air flow amount ratio adjustment is carried out as shown in Figs. 3 to 5.

Fig. 3 shows the state wherein the ratio of cool air having passed through the evaporator 2 but bypassing the heater 3 is 100% (COOL MAX) and wherein the first plate-like member 6 is moved to an end of each guide path 8 on the side of the hot air passage 4 to fully block the hot air passage 4.

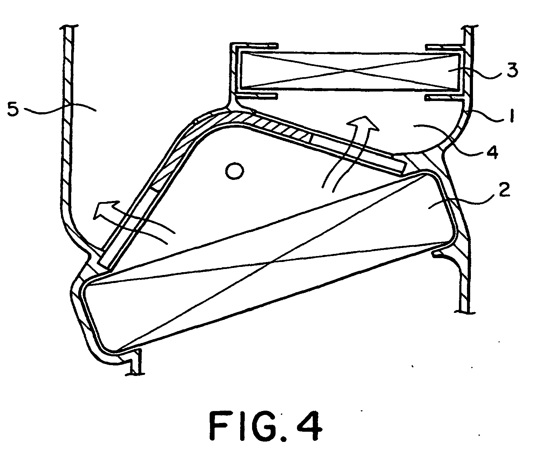

Fig. 4 shows the state wherein the ratio of cool air and hot air is 50:50 and wherein the first plate-like member 6 is moved to an intermediate position in each guide path 8 to half open the cool air passage 5 and the hot air passage 4.

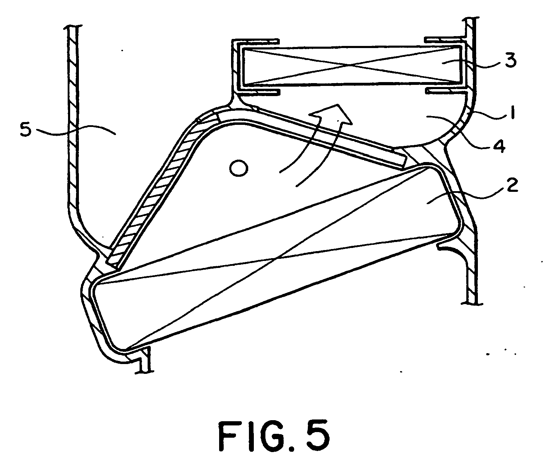

Fig. 5 shows the state wherein the ratio of hot air that passes through the heater 3 is 100% (HOT MAX) and wherein the first plate-like member 6 is moved to an end of each guide path 8 on the side of the cool air passage 5 to fully block the cool air passage 5.

As described above, by moving the first plate-like member 6, it is possible to control the air conditioner smoothly into each of the respective modes.

According to the foregoing automotive air conditioner, it is configured that the first plate-like member 6 having flexibility can move along the guide paths 8 each having the curved portion 7, so that the degree of designing freedom can be largely improved and the relevant portion can be largely reduced in size. Therefore, it is possible to achieve large reduction in size of the duct 1, and thus large reduction in size of the whole automotive air conditioner.

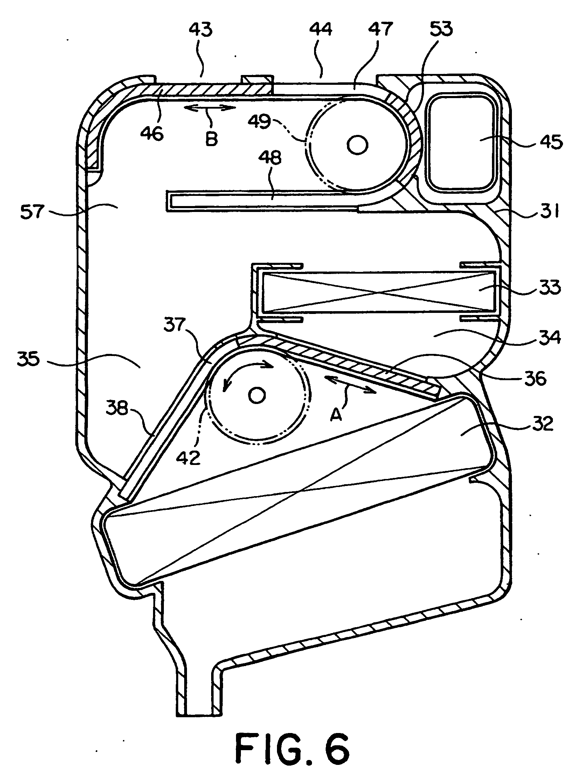

Referring now to Figs. 6 to 13, an automotive air conditioner according to a second embodiment of the present invention will be described.

In Fig. 6, a duct 31 defines therein a space extending in a first direction that is approximately directed from lower to upper in the figure. In the duct 31, an evaporator 32 for refrigerant as a cooler and a heater 33 are disposed in order in the first direction, i.e. in the air flow direction. Between the evaporator 32 and the heater 33, a hot air passage 34 for allowing the air having passed through the evaporator 32 to pass through the heater 33, and a cool air passage 35 for allowing the air having passed through the evaporator 32 to pass therethrough bypassing the heater 33 are formed in a bifurcate fashion. The hot air passage 34 and the cool air passage 35 are arranged in parallel with each other in a second direction (lateral direction in Fig. 6) that crosses the first direction or is orthogonal thereto.

Between the evaporator 32 and the heater 33, a first plate-like member 36 is provided as air flow amount ratio adjusting means for adjusting the ratio of the amounts of air passing through the two air flow passages, i.e. the hot air passage 34 and the cool air passage 35, respectively. The first plate-like member 36 is provided so as to be movable approximately in the second direction, more specifically, in a direction designated by arrows A (hereinafter referred to as "moving direction A"). The first plate-like member 36 is guided along a pair of guide paths 38 each in the form of a groove and having a curved portion 37. The guide paths 38 are provided on both sides of the first plate-like member 36 in a third direction (direction perpendicular to the paper surface on which Fig. 6 is drawn) that crosses the first and second directions or is orthogonal thereto.

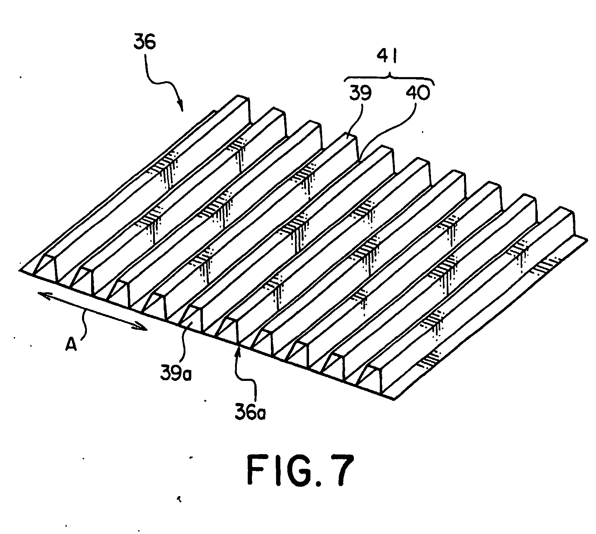

The first plate-like member 36 is made of resin having flexibility and formed into the shape as shown in Fig. 7. Accordingly, the first plate-like member 36 is given flexibility or softness about axes each extending in the third direction. In other words, it may also be said that the first plate-like member 36 has softness in the moving direction A. This state is called here "The first plate-like member 36 has flexibility in the first direction.".

The first plate-like member 36 has one surface 36a (the underside of Fig. 7) that is substantially formed into a flat shape, and the other surface formed into a concave-convex shape 41. In the concave-convex shape 41, a number of crest portions 39 and a number of valley portions 40 each extending in the third direction are alternately and regularly formed. In other words, the crest portions 39 are formed at regular intervals therebetween in the second direction, i.e. in the moving direction A. The first plate-like member 36 has flexibility at portions between the crest portions 39, i.e. portions corresponding to the valley portions 40. Inasmuch as the concave-convex shape 41 is regularly configured, it can engage with a gear or a gear-like member. Further, each crest portion 39 is formed into a hollow structure having a hollow portion 39a, thereby to reduce the weight of the first plate-like member 36. In this manner, the first plate-like member 36 is structurally given rigidity in the second and third directions by the concave-convex surface.

The first plate-like member 36 is disposed so as to be movable along the guide paths 38 as shown in Fig. 6, with the surface formed into the concave-convex shape 41 being directed toward the side of the evaporator 32 and with the surface 36a formed into the flat shape being directed toward the side of the heater 33. For example, gears 42 engaging with the concave-convex shape 41 of the first plate-like member 36 are provided in positions corresponding to the curved portions 37 of the guide paths 38. By rotating the gears 42, the first plate-like member 36 can be moved by a desired displacement amount in the moving direction A. In this event, the first plate-like member 36 moves such that both sides thereof in the third direction slide along the guide paths 38.

In the duct 31, a DEF air outlet 43, a VENT air outlet 44 and a FOOT air outlet 45 are formed downstream of the heater 33. Opening degree control for the air outlets 43, 44 and 45 is performed by a second movable plate-like member 46 having a structure like that of the foregoing first plate-like member 36.

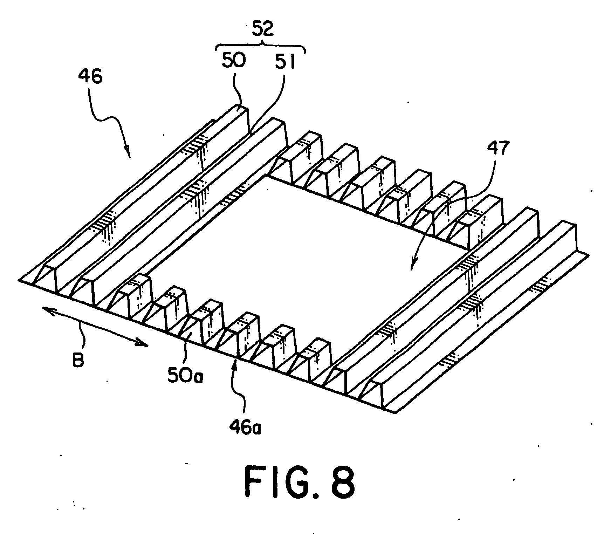

The second plate-like member 46 is made of resin having flexibility and formed into the shape as shown in Fig. 8. Accordingly, the second plate-like member 46 is given flexibility or softness about axes each extending in the third direction. In other words, it may also be said that the second plate-like member 46 has softness in a moving direction B. This state is called here "The second plate-like member 46 has flexibility in the first direction.".

The second plate-like member 46 has one surface 46a (the underside of Fig. 8) that is substantially formed into a flat shape, and the other surface formed into a concave-convex shape 52. In the concave-convex shape 52, a number of crest portions 50 and a number of valley portions 51 each extending in the third direction are alternately and regularly formed. In other words, the crest portions 50 are formed at regular intervals therebetween in the second direction, i.e. in the moving direction B. The second plate-like member 46 has flexibility at portions between the crest portions 50, i.e. portions corresponding to the valley portions 51. Inasmuch as the concave-convex shape 52 is regularly configured, it can engage with a gear or a gear-like member. Further, each crest portion 50 is formed into a hollow structure having a hollow portion 50a, thereby to reduce the weight of the second plate-like member 46. In this manner, the second plate-like member 46 is structurally given rigidity in the second and third directions by the concave-convex surface.

The second plate-like member 46 is disposed so as to be movable along guide paths 48 each in the form of a groove, with the surface formed into the concave-convex shape 52 being directed toward the side of the heater 33 and with the surface 46a formed into the flat shape being directed toward the side of the air outlets 43, 44 and 45. For example, gears 49 engaging with the concave-convex shape 52 of the second plate-like member 46 are provided in positions corresponding to curved portions 53 of the guide paths 48. By rotating the gears 49, the second plate-like member 46 can be moved by a desired displacement amount in the moving direction B. In this event, the second plate-like member 46 moves such that both sides thereof in the third direction slide along the guide paths 48.

The second plate-like member 46 slides along the guide paths 48 with both sides thereof in the width direction being guided by the guide paths 48, thereby to control the opening degrees of the air outlets 43, 44 and 45. By means of an inner surface (on the underside 46a) of the second plate-like member 46 whose shape changes depending on the sliding state thereof and by means of ends 54 and 55, in the moving directions, of the second plate-like member 46 and an opening 47 of the second plate-like member 46, whose positions change according to the sliding movement thereof, the opening degrees of the respective air outlets are adjusted. Further, by means of the inner surface and the moving direction ends 54 and 55 of the second plate-like member 46, desirable air flow directions are given to hot air and air subjected to air mixing.

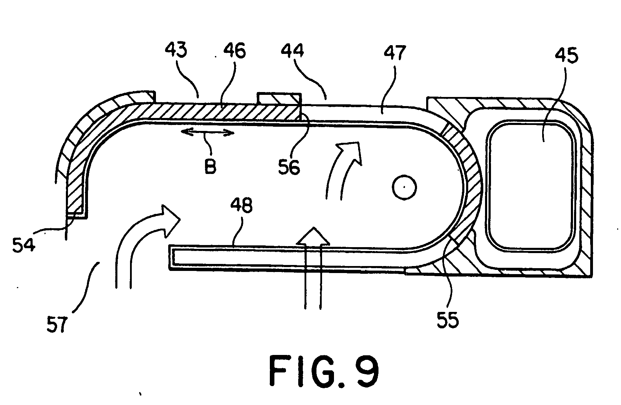

In a VENT mode shown in Fig. 9, the moving direction end 54 of the second plate-like member 46 is moved to an end of each guide path 48. In this state, the position of the opening 47 approximately coincides with the VENT air outlet 44. As a result, only the VENT air outlet 44 is opened while the other air outlets 43 and 45 are closed. In this mode, cool air having passed through the evaporator 32 is blown out of the VENT air outlet 44 only. In this mode, inasmuch as the second plate-like member 46 does not exist in a passage where cool air flows to reach the VENT outlet 44, occurrence of a pressure loss can be prevented.

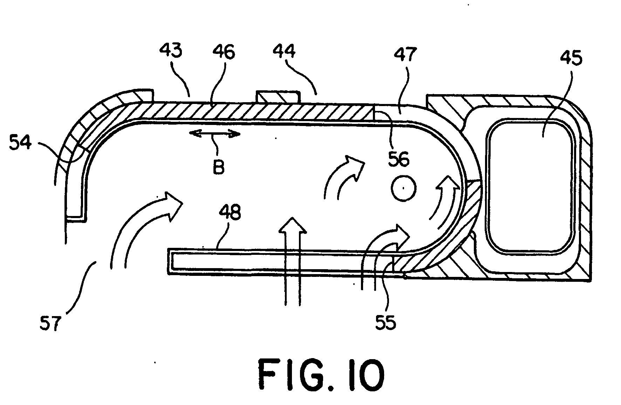

In a BILEVEL mode shown in Fig. 10, the second plate-like member 46 is moved to a position where the opening 47 opens part of the VENT air outlet 44 and part of the FOOT air outlet 45. On the other hand, the DEF air outlet 43 is fully closed by the second plate-like member 46. The second plate-like member 46 does not exist in a passage that extends from an air mixing passage 57 and reaches the side of the VENT air outlet 44. Therefore, air subjected to air mixing in the air mixing passage 57 flows smoothly into the VENT air outlet 44 and the FOOT air outlet 45. Further, by means of the end 55 of the second plate-like member 46 and a curved inner surface extending from the end 55 to the rim 56 of the opening 47, the air flow direction heading toward the VENT air outlet 44 and the FOOT air outlet 45 is given.

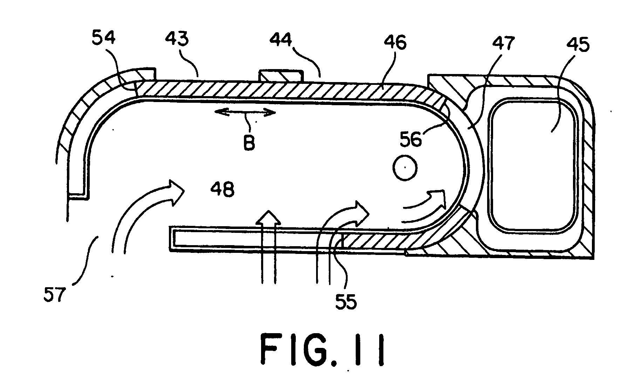

In a FOOT mode shown in Fig. 11, the second plate-like member 46 is moved to a position where the opening 47 approximately coincides with the FOOT air outlet 45. On the other hand, the DEF air outlet 43 and the VENT air outlet 44 are fully closed by the second plate-like member 46.

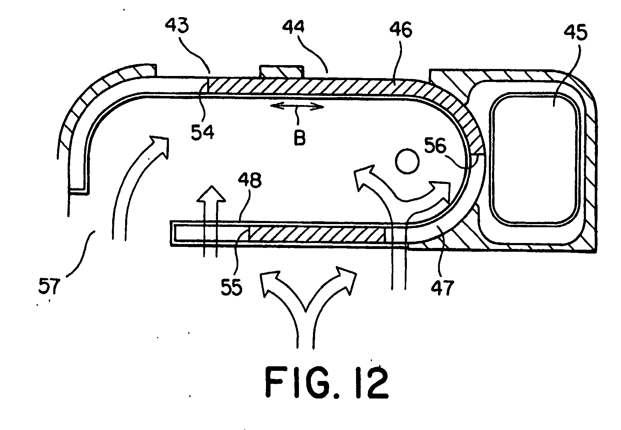

In a DEF-FOOT mode shown in Fig. 12, the end 54 of the second plate-like member 46 is moved to a position where part of the DEF air outlet 43 is opened. In this event, part of the opening 47 and part of the FOOT air outlet 45 coincide with each other, so that the FOOT air outlet 45 is partly opened. On the other hand, the end 55 of the second plate-like member 46 is projected to a position where the hot air passage 34 is partly blocked. However, part of the opening 47 extends into the hot air passage 34. Accordingly, part of air having passed through the heater 33 passes through the opening 47 of the second plate-like member 46 to directly flow into the side of the FOOT air outlet 45. On the other hand, air having hit the second plate-like member 46 is given an air flow direction heading toward the air mixing passage 57.

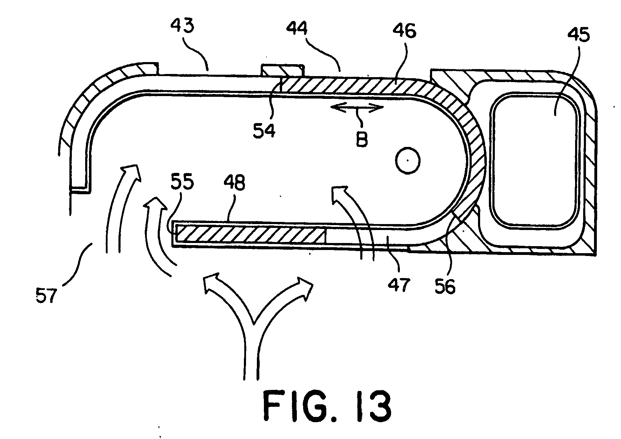

In a DEF mode shown in Fig. 13, the end 55 of the second plate-like member 46 is moved to an end of each guide path 48. In this state, the end 54 is moved to a position where the DEF air outlet 43 is fully opened. As a result, only the DEF air outlet 43 is opened, while the VENT air outlet 44 and the FOOT air outlet 45 are fully closed by the second plate-like member 46. Also in this mode, like in the DEF-FOOT mode, the opening 47 serves as an entrance for hot air having passed through the heater 33. On the other hand, air having hit the second plate-like member 46 is given air flow directions toward the right and left sides in Fig. 13, so that air is distributed toward the side of the air mixing passage 57 and the side of the opening 47.

When the second plate-like member 46 is moved in the second direction (moving direction B), the positions of the ends 54 and 55 and the opening 47 are moved, so that the opening degrees of the air outlets 43, 44 and 45 can be adjusted according to the respective modes as described above. Further, the desirable air flow directions can be given to air heading toward the side of the air outlets according to the respective modes, so that a pressure loss can be largely reduced.

According to the foregoing automotive air conditioner, by providing the opening 47 in the second plate-like member 46 having flexibility and by moving the second plate-like member 46 in the second direction, the opening degrees of the air outlets 43, 44 and 45 can be adjusted depending on the respective modes. Therefore, there can be achieved reduction in size of the duct 31 and thus reduction in size of the whole automotive air conditioner.

In the foregoing description, explanation has been made of the case where the opening degrees of the air outlets 43, 44 and 45 are adjusted by moving the second plate-like member 46. On the other hand, it is also possible to control the air flow directions at the respective air outlets 43, 44 and 45.

As described above, the shape of the second plate-like member 46 changes depending on the sliding state thereof. In this event, by means of the inner surface (on the underside 46a) of the second plate-like member 46, the moving direction ends 54 and 55 of the second plate-like member 46 and the rim 56 of the opening 47, a desirable air flow direction is given to air in the duct 31. In this case, the second plate-like member 46 serves an air outlet control plate for controlling the air flow direction.

In the VENT mode shown in Fig. 9, the moving direction end 54 of the second plate-like member 46 is moved to an end of each guide path 48. In this state, the position of the opening 47 approximately coincides with the VENT air outlet 44. As a result, only the VENT air outlet 44 is opened while the other air outlets 43 and 45 are closed. The second plate-like member 46 does not exist between the air mixing passage 57 and the VENT air outlet 44. Accordingly, for cool air having passed through the evaporator 32, there is formed a passage that extends from the cool air passage 35, passes through the air mixing passage 57 and between the guide paths 48, and reaches the VENT air outlet 44.

In the BILEVEL mode shown in Fig. 10, the second plate-like member 46 is moved to a position where the opening 47 opens part of the VENT air outlet 44 and part of the FOOT air outlet 45. On the other hand, the DEF air outlet 43 is fully closed by the second plate-like member 46. The second plate-like member 46 does not exist in a passage that extends from an air mixing passage 57 and reaches the side of the VENT air outlet 44. Therefore, like in the foregoing VENT mode, air subjected to air mixing in the air mixing passage 57 flows smoothly into the VENT air outlet 44 and the FOOT air outlet 45. Further, by means of the end 55 of the second plate-like member 46 and a curved inner surface extending from the end 55 to the rim 56 of the opening 47, the air flow direction heading toward the VENT air outlet 44 and the FOOT air outlet 45 is given.

In the FOOT mode shown in Fig. 11, the second plate-like member 46 is moved to a position where the opening 47 approximately coincides with the FOOT air outlet 45. On the other hand, the DEF air outlet 43 and the VENT air outlet 44 are fully closed by the second plate-like member 46. The end 55 of the second plate-like member 46 projects only partly in the hot air passage 34 extending from the heater 33, so that a passage where the air flow direction is changed approximately perpendicularly can be short enough to reduce a pressure loss, and thus the sufficient FOOT air flow amount can be secured. Therefore, hot air having passed through the heater 33 passes between the guide paths 48 and smoothly flows into the FOOT air outlet 45. On the other hand, with respect to hot air passing on the side of the end 55 of the second plate-like member 46, a desirable air flow direction toward the FOOT air outlet 45 is given by means of the end 55 and the curved inner surface extending from the end 55 to the rim 56.

In the DEF-FOOT mode shown in Fig. 12, the end 54 of the second plate-like member 46 is moved to a position where part of the DEF air outlet 43 is opened. In this event, part of the opening 47 and part of the FOOT air outlet 45 coincide with each other, so that the FOOT air outlet 45 is partly opened. On the other hand, the end 55 of the second plate-like member 46 is projected to a position where the hot air passage 34 is partly blocked. However, the opening 47 extends into the hot air passage 34. Accordingly, part of air having passed through the heater 33 passes through the opening 47 of the second plate-like member 46 to directly flow into the side of the FOOT air outlet 45. On the other hand, air having hit the second plate-like member 46 is given an air flow direction heading toward the air mixing passage 57. In this mode, since the opening 47 forms an entrance for hot air to directly flow toward the FOOT air outlet 45 without being subjected to air mixing, a pressure loss can be significantly decreased.

In the DEF mode shown in Fig. 13, the end 55 of the second plate-like member 46 is moved to an end of each guide path 48. In this state, the end 54 is moved to a position where the DEF air outlet 43 is fully opened. As a result, only the DEF air outlet 43 is opened. Also in this mode, like in the DEF-FOOT mode, the opening 47 serves as an entrance for hot air. On the other hand, air having hit the second plate-like member 46 is given air flow directions toward the right and left sides in Fig. 13, so that air is distributed toward the side of the air mixing passage 57 and the side of the opening 47.

According to the foregoing automotive air conditioner, part of the second plate-like member 46 that slides depending on the respective modes to change its shape and position is provided as an air flow direction control plate for giving a desirable air flow direction to air subjected to air mixing or hot air, so that a pressure loss in the duct 31 can be largely reduced to secure a desired air flow amount. Therefore, there can be achieved an automotive air conditioner excellent in temperature adjustment, which enables blowing out air at a preset desired temperature.

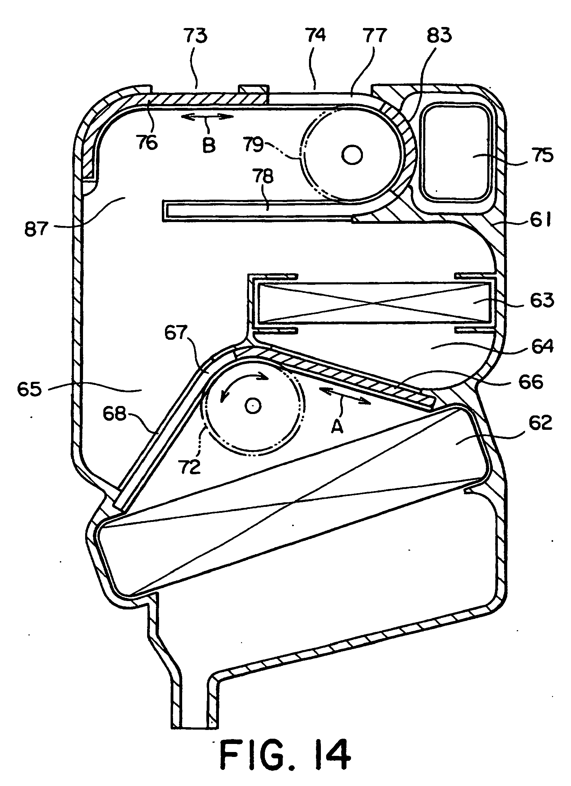

Referring now to Figs. 14 to 28, an automotive air conditioner according to a third embodiment of the present invention will be described.

In Fig. 14, a duct 61 defines therein a space extending in a first direction that is approximately directed from lower to upper in the figure. In the duct 61, an evaporator 62 as a cooler and a heater 63 are disposed in order in the first direction, i.e. in the air flow direction. Between the evaporator 62 and the heater 63, a hot air passage 64 for allowing the air having passed through the evaporator 62 to pass through the heater 63, and a cool air passage 65 for allowing the air having passed through the evaporator 62 to pass therethrough bypassing the heater 63 are formed in a bifurcate fashion. The hot air passage 64 and the cool air passage 65 are arranged in parallel with each other in a second direction (lateral direction in Fig. 14) that crosses the first direction or is orthogonal thereto.

Between the evaporator 62 and the heater 63, a first plate-like member 66 is provided as air flow amount ratio adjusting means for adjusting the ratio of the amounts of air passing through the two air flow passages, i.e. the hot air passage 64 and the cool air passage 65, respectively. The first plate-like member 66 is provided so as to be movable approximately in the second direction, more specifically, in a direction designated by arrows A (hereinafter referred to as "moving direction A"). The first plate-like member 66 is guided along a pair of guide paths 68 each in the form of a groove and having a curved portion 67. The guide paths 68 are provided on both sides of the first plate-like member 66 in a third direction (direction perpendicular to the paper surface on which Fig. 14 is drawn) that crosses the first and second directions or is orthogonal thereto.

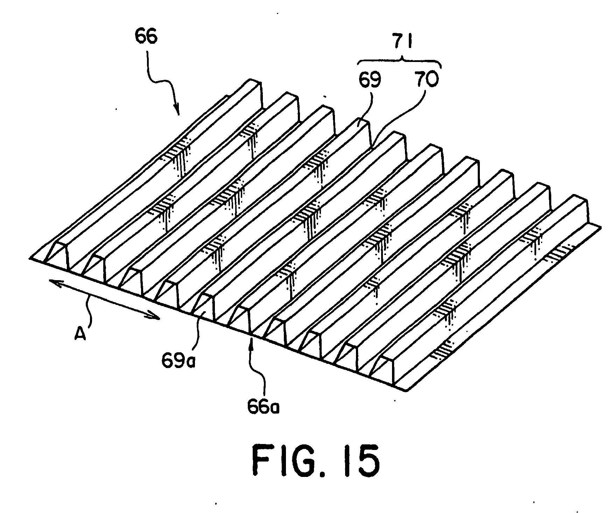

The first plate-like member 66 is made of resin having flexibility and formed into the shape as shown in Fig. 15. Accordingly, the first plate-like member 66 is given flexibility or softness about axes each extending in the third direction. In other words, it may also be said that the first plate-like member 66 has softness in the moving direction A. This state is called here "The first plate-like member 66 has flexibility in the first direction.".

The first plate-like member 66 has one surface 36a (the underside of Fig. 15) that is substantially formed into a flat shape, and the other surface formed into a concave-convex shape 71. In the concave-convex shape 71, a number of crest portions 69 and a number of valley portions 70 each extending in the third direction are alternately and regularly formed. In other words, the crest portions 69 are formed at regular intervals therebetween in the second direction, i.e. in the moving direction A. The first plate-like member 66 has flexibility at portions between the crest portions 69, i.e. portions corresponding to the valley portions 70. Inasmuch as the concave-convex shape 71 is regularly configured, it can engage with a gear or a gear-like member. Further, each crest portion 69 is formed into a hollow structure having a hollow portion 69a, thereby to reduce the weight of the first plate-like member 66. In this manner, the first plate-like member 66 is structurally given rigidity in the second and third directions by the concave-convex surface.

The first plate-like member 66 is disposed so as to be movable along the guide paths 68 as shown in Fig. 14, with the surface formed into the concave-convex shape 71 being directed toward the side of the evaporator 62 and with the surface 66a formed into the flat shape being directed toward the side of the heater 63. For example, gears 72 engaging with the concave-convex shape 71 of the first plate-like member 66 are provided in positions corresponding to the curved portions 67 of the guide paths 68. By rotating the gears 72, the first plate-like member 66 can be moved by a desired displacement amount in the moving direction A. In this event, the first plate-like member 66 moves such that both sides thereof in the third direction slide along the guide paths 68.

In the duct 61, a DEF air outlet 73, a VENT air outlet 74 and a FOOT air outlet 75 are formed downstream of the heater 63. Opening degree control for the air outlets 73, 74 and 75 is performed by a second movable plate-like member 76 having a structure like that of the foregoing first plate-like member 66.

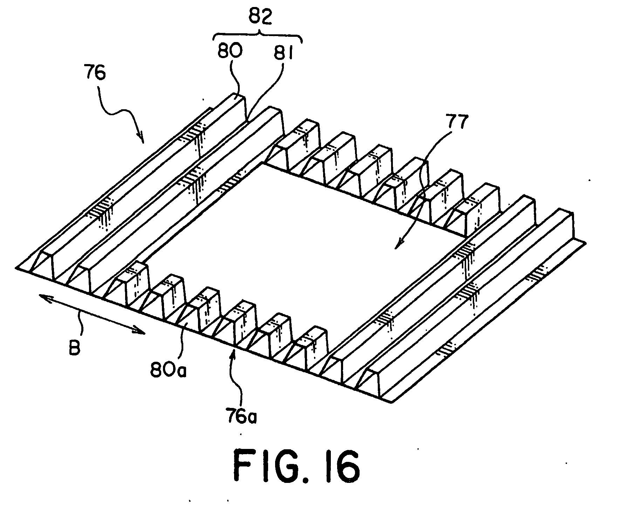

The second plate-like member 76 is made of resin having flexibility and formed into the shape as shown in Fig. 16. Accordingly, the second plate-like member 76 is given flexibility or softness about axes each extending in the third direction. In other words, it may also be said that the second plate-like member 76 has softness in a moving direction B. This state is called here "The second plate-like member 76 has flexibility in the first direction.".

The second plate-like member 76 has one surface 76a (the underside of Fig. 16) that is substantially formed into a flat shape, and the other surface formed into a concave-convex shape 82. In the concave-convex shape 82, a number of crest portions 80 and a number of valley portions 81 each extending in the third direction are alternately and regularly formed. In other words, the crest portions 80 are formed at regular intervals therebetween in the second direction, i.e. in the moving direction B. The second plate-like member 76 has flexibility at portions between the crest portions 80, i.e. portions corresponding to the valley portions 81. Inasmuch as the concave-convex shape 82 is regularly configured, it can engage with a gear or a gear-like member. Further, each crest portion 80 is formed into a hollow structure having a hollow portion 80a, thereby to reduce the weight of the second plate-like member 76. In this manner, the second plate-like member 76 is structurally given rigidity in the second and third directions by the concave-convex surface.

The second plate-like member 76 is disposed so as to be movable along guide paths 78 each in the form of a groove, with the surface formed into the concave-convex shape 82 being directed toward the side of the heater 63 and with the surface 76a formed into the flat shape being directed toward the side of the air outlets 73, 74 and 75. For example, gears 79 engaging with the concave-convex shape 82 of the second plate-like member 76 are provided in positions corresponding to curved portions 83 of the guide paths 78. By rotating the gears 79, the second plate-like member 76 can be moved by a desired displacement amount in the moving direction B. In this event, the second plate-like member 76 moves such that both sides thereof in the third direction slide along the guide paths 78.

The second plate-like member 76 slides along the guide paths 78 with both sides thereof in the width direction being guided by the guide paths 78, thereby to control the opening degrees of the air outlets 73, 74 and 75. By means of an inner surface (on the underside 76a) of the second plate-like member 76 whose shape changes depending on the sliding state thereof and by means of ends 84 and 85, in the moving directions, of the second plate-like member 76 and an opening 77 of the second plate-like member 76, whose positions change according to the sliding movement thereof, the opening degrees of the respective air outlets are adjusted. Further, by means of the inner surface and the moving direction ends 84 and 85 of the second plate-like member 76, desirable air flow directions are given to hot air and air subjected to air mixing.

As will be described hereinbelow, the first plate-like member 66 is moved by driving means having the gears 72, while the second plate-like member 76 is moved by driving means having the gears 79. Explanation will be made hereinbelow about the driving means of the first plate-like member 66. However, as shown by reference symbols bracketed in the figures, the same driving means can be employed for the second plate-like member 76.

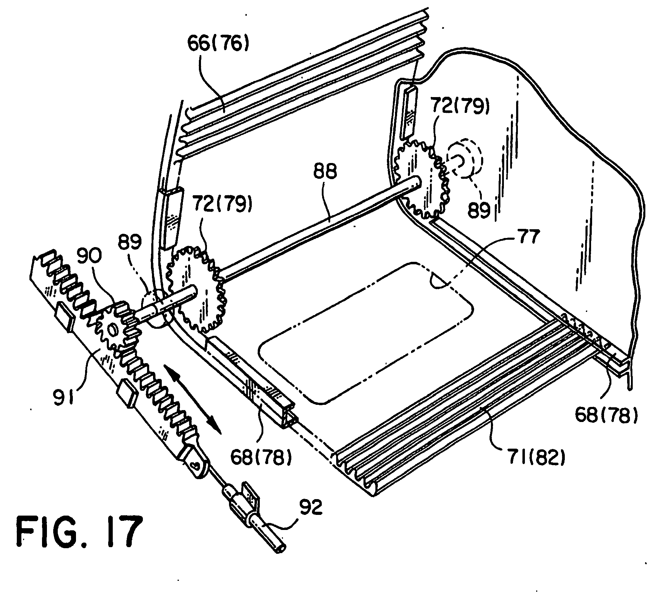

In Fig. 17, a shaft 88 is fixedly inserted through the centers of the gears 72 engaging with the concave-convex shape 71 of the first plate-like member 66. Both ends of the shaft 88 are rotatably supported by bearings 89 each attached to the wall of the duct 61. Near an end of the shaft 88, a pinion gear 90 is fixed. The pinion gear 90 engages with a rack 91. A cable 92 is coupled to the rack 91. The cable 92 is coupled to a lever (not shown). When a user (e.g. automobile driver) operates the lever, the rack 91 moves in an arrow direction and, following this, the pinion gear 90 and the gears 72 rotate so that the first plate-like member 66 engaging with the gears 72 moves along the guide paths 68.

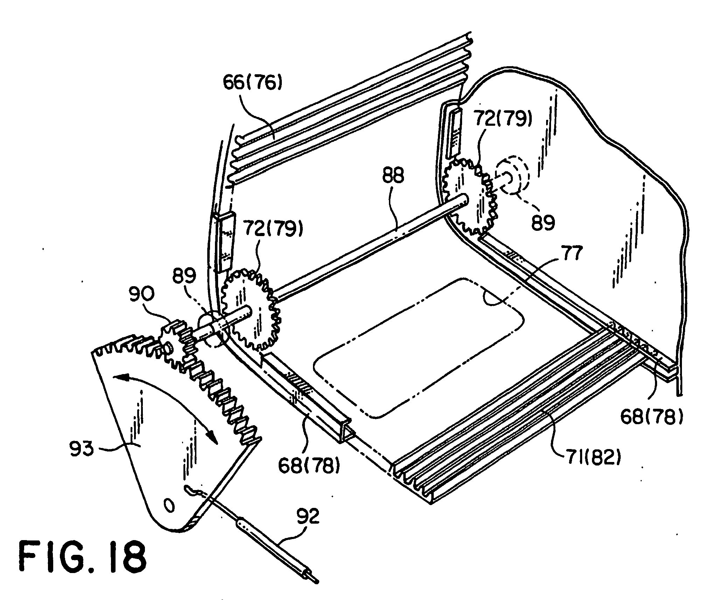

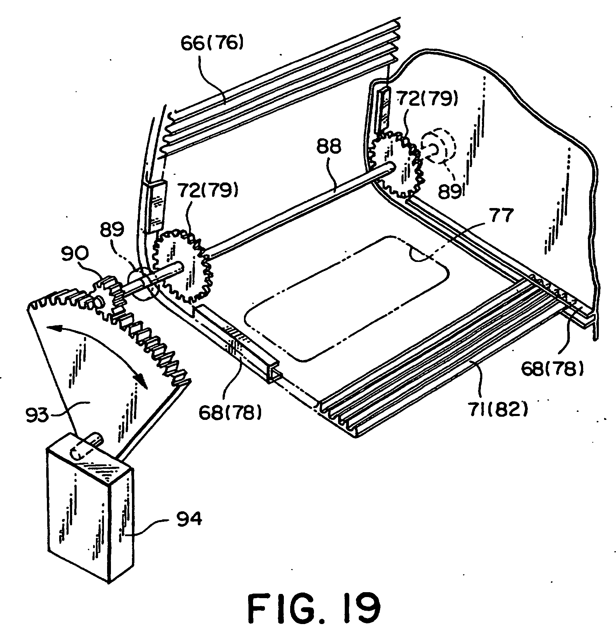

In Fig. 18, the pinion gear 90 engages with a fan-shaped gear 93. A cable 92 is coupled to the gear 93. As shown in Fig. 19, the gear 93 may be coupled to a motor actuator 94. In Figs. 18 and 19, when the fan-shaped gear 93 rocks in an arrow direction, the gears 72 rotate so that the first plate-like member 66 engaging with the gears 72 moves along the guide paths 68.

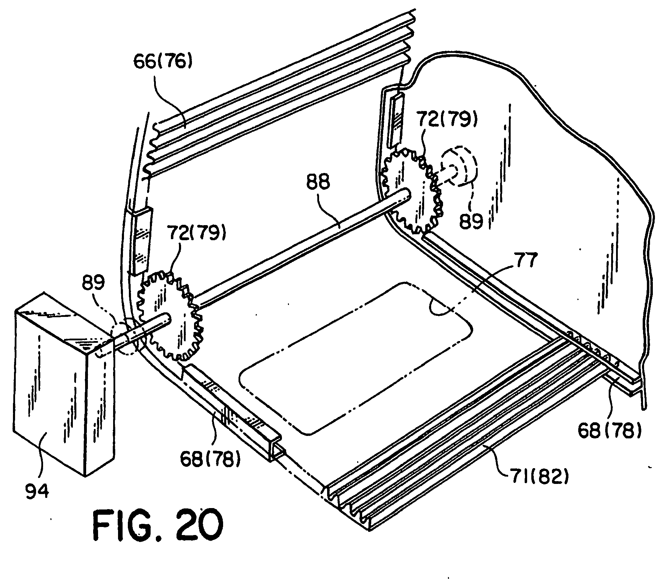

In Fig. 20, one end of the shaft 88 is directly coupled to the motor actuator 94, so that a driving force is directly transmitted from the motor actuator 94 to the shaft 88 to move the first plate-like member 66.

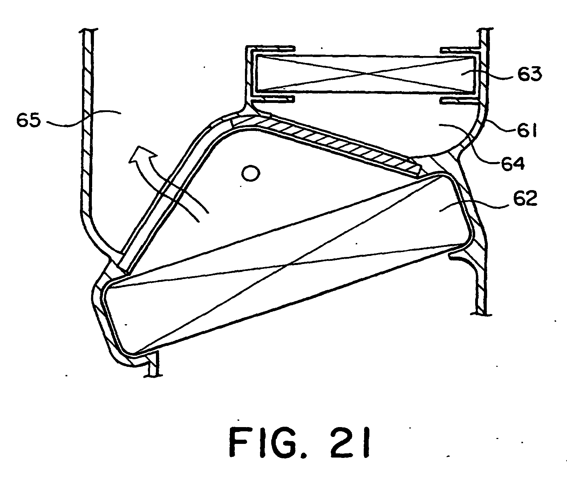

Figs. 21 to 23 show the moving states of the first plate-like member 66 when it is used for air flow amount ratio adjustment.

Fig. 21 shows the state wherein the ratio of cool air having passed through the evaporator 62 but bypassing the heater 63 is 100% (COOL MAX) and wherein the first plate-like member 66 is moved to an end of each guide path 68 on the side of the hot air passage 64 to fully block the hot air passage 64.

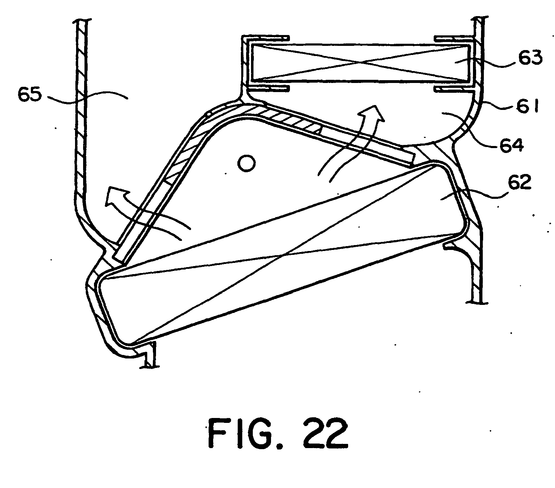

Fig. 22 shows the state wherein the ratio of cool air and hot air is 50:50 and wherein the first plate-like member 66 is moved to an intermediate position in each guide path 68 to half open the cool air passage 65 and the hot air passage 64.

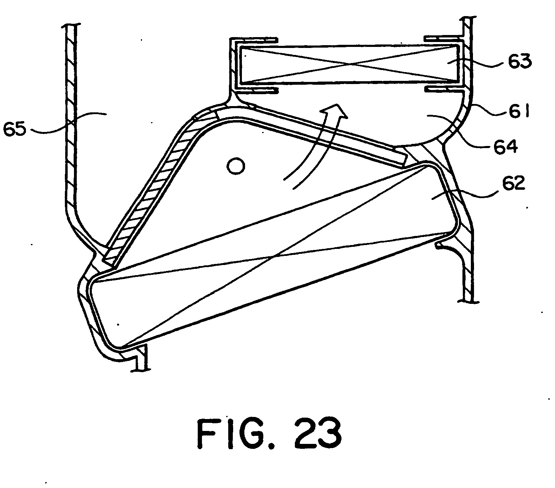

Fig. 23 shows the state wherein the ratio of hot air that passes through the heater 63 is 100% (HOT MAX) and wherein the first plate-like member 66 is moved to an end of each guide path 68 on the side of the cool air passage 65 to fully block the cool air passage 65.

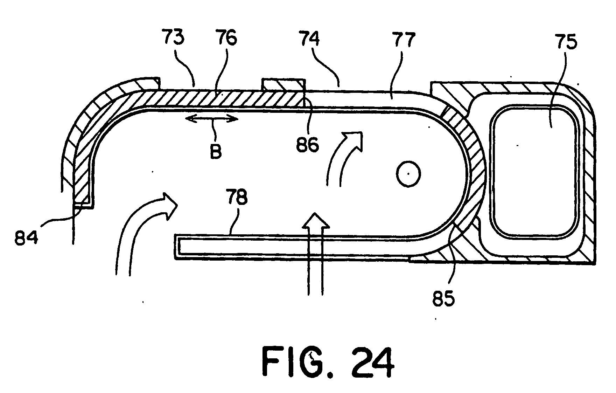

Figs. 24 to 28 show the moving states of the second plate-like member 76 having the opening 77 when it is used for air outlet control, i.e. air outlet opening degree adjustment.

In a VENT mode shown in Fig. 24, the moving direction end 84 of the second plate-like member 76 is moved to an end of each guide path 78. In this state, the position of the opening 77 approximately coincides with the VENT air outlet 74. As a result, only the VENT air outlet 74 is opened while the other air outlets 73 and 75 are closed. In this mode, cool air having passed through the evaporator 62 is blown out of the VENT air outlet 74 only. In this mode, inasmuch as the second plate-like member 76 does not exist in a passage where cool air flows to reach the VENT outlet 74, occurrence of a pressure loss can be prevented.

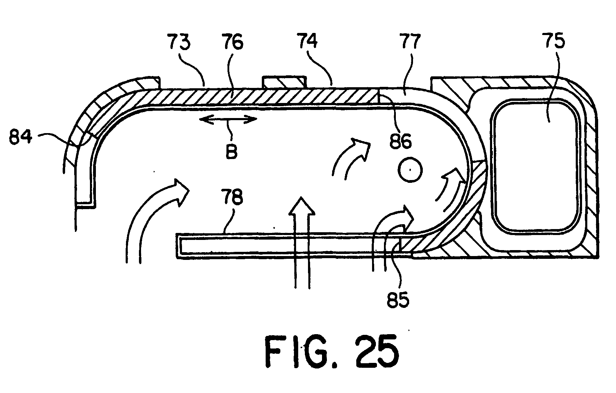

In a BILEVEL mode shown in Fig. 25, the second plate-like member 76 is moved to a position where the opening 77 opens part of the VENT air outlet 74 and part of the FOOT air outlet 45. On the other hand, the DEF air outlet 73 is fully closed by the second plate-like member 76. The second plate-like member 76 does not exist in a passage that extends from an air mixing passage 87 and reaches the side of the VENT air outlet 74. Therefore, air subjected to air mixing in the air mixing passage 87 flows smoothly into the VENT air outlet 74 and the FOOT air outlet 75. Further, by means of the end 85 of the second plate-like member 76 and a curved inner surface extending from the end 85 to the rim 86 of the opening 77, the air flow direction heading toward the VENT air outlet 74 and the FOOT air outlet 75 is given.

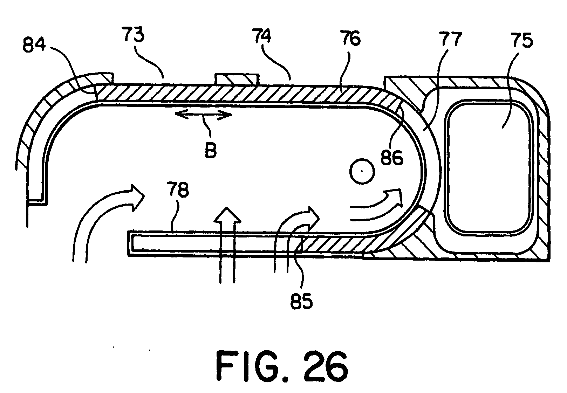

In a FOOT mode shown in Fig. 26, the second plate-like member 76 is moved to a position where the opening 77 approximately coincides with the FOOT air outlet 75. On the other hand, the DEF air outlet 73 and the VENT air outlet 74 are fully closed by the second plate-like member 76.

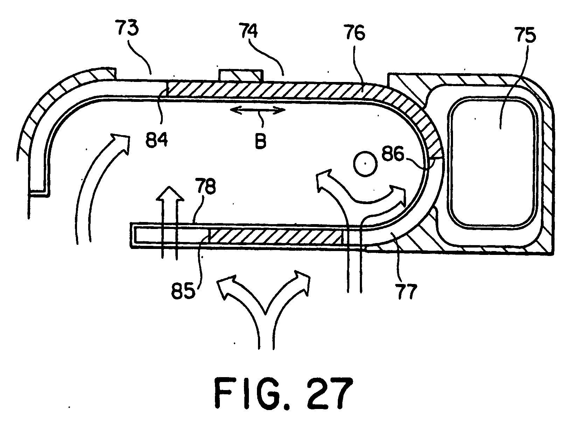

In a DEF-FOOT mode shown in Fig. 27, the end 84 of the second plate-like member 76 is moved to a position where part of the DEF air outlet 73 is opened. In this event, part of the opening 77 and part of the FOOT air outlet 75 coincide with each other, so that the FOOT air outlet 75 is partly opened. On the other hand, the end 85 of the second plate-like member 76 is projected to a position where the hot air passage 64 is partly blocked. However, part of the opening 77 extends into the hot air passage 64. Accordingly, part of air having passed through the heater 63 passes through the opening 77 of the second plate-like member 76 to directly flow into the side of the FOOT air outlet 75. On the other hand, air having hit the second plate-like member 76 is given an air flow direction heading toward the air mixing passage 87.

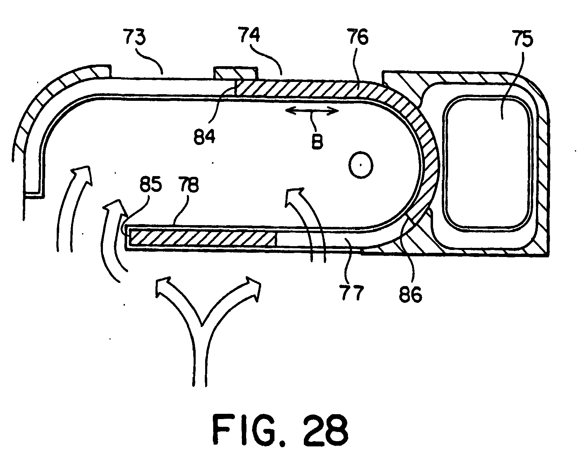

In a DEF mode shown in Fig. 28, the end 85 of the second plate-like member 76 is moved to an end of each guide path 78. In this state, the end 84 is moved to a position where the DEF air outlet 73 is fully opened. As a result, only the DEF air outlet 73 is opened, while the VENT air outlet 74 and the FOOT air outlet 75 are fully closed by the second plate-like member 76. Also in this mode, like in the DEF-FOOT mode, the opening 77 serves as an entrance for hot air having passed through the heater 63. On the other hand, air having hit the second plate-like member 76 is given air flow directions toward the right and left sides in Fig. 28, so that air is distributed toward the side of the air mixing passage 87 and the side of the opening 77.

According to the foregoing automotive air conditioner, the plate-like members are moved in such directions for controlling the air flow passages through the rotation of the gears, so that the installation space and the operation space can be narrowed. Therefore, the duct 61 can be reduced in size, and thus the whole automotive air conditioner can be reduced in size. Further, the structure of the mechanism for driving each plate-like member can be simplified to improve the degree of designing freedom.

## Claims

1. An automotive air conditioner comprising a duct (1,31,61) defining therein a space extending in a first direction for allowing the flow of air therethrough, a guide (8,18,38,48,68,78) fixed to said duct and extending in a second direction crossing said first direction, and a movable plate-like member (6,16,36,46,66,76) that is guided by said guide and influences the flow of air in said space, wherein said plate-like member has flexibility in said first direction, wherein said plate-like member has a first and a second surface confronting each other in said first direction, said first surface (6a, 36a, 46a, 66a, 76a) has a substantially flat shape, while said second surface has a plurality crest portions (9, 39, 50, 69, 80) extending in a third direction crossing said first and second directions and arranged at intervals therebetween in said second direction and wherein said plate-like member (6, 36, 66) has flexibility at portions between said crest portions (9, 39, 69),
**characterised in that** said automotive air conditioner further comprises a driving apparatus for moving said plate-like member in said second direction, said driving apparatus comprising:
concave portions (10, 40, 51, 70, 81) and convex portions (9, 39, 50, 69, 80) formed by said crest portions of said plate-like member (6, 16, 36, 46, 66, 76) confronting each other in said first direction, said concave portions and said convex portions regularly adjoining each other in said second direction; and
a gear (12, 19, 42, 49, 72, 79) engaging with said concave portions and said convex portions and sending said concave portions and said convex portions in said second direction upon rotation thereof.

2. An automotive air conditioner according to claim 1, wherein said space includes at least two air flow passages (4, 5, 34, 35, 64, 65) arranged in parallel to each other in said second direction, and said plate-like member (6, 36, 66) adjusts the ratio of amounts of air passing through said air flow passages.

3. An automotive air conditioner according to claim 2, wherein said at least two air flow passages include a hot air passage (4, 34, 64) and a cool air passage (5, 35, 65) adjoining each other in said second direction.

4. An automotive air conditioner according to claim 2 or 3, wherein said plate-like member (6, 36, 66) has rigidity in said second and third directions.

5. An automotive air conditioner according to any one of claims 2 to 4, wherein said plate-like member (6, 36, 66) is moved in said second direction to adjust opening degrees of said air flow passages.

6. An automotive air conditioner according to one of the preceding claims, wherein each of said crest portions (9, 39, 69) has a hollow structure.

7. An automotive air conditioner according to claim 1, wherein said space has a plurality of air outlets (13, 14, 15, 43, 44, 45, 73, 74, 75) corresponding to different air conditioning modes, and said plate-like member (16, 46, 76) adjusts amounts of air blown out of said respective air outlets.

8. An automotive air conditioner according to claim 7, wherein said plate-like member (16, 46, 76) has an opening (17, 47, 77) that can adjust opening degrees of said air outlets (13, 14, 15, 43, 44, 45, 73, 74, 75) following movement thereof in said second direction.

9. An automotive air conditioner according to claim 7 or 8, wherein said opening (17, 47, 77) serves as an exit of said space.

10. An automotive air conditioner according to any one of claims 7 to 9, wherein said plate-like member (16, 46, 76) has opposite ends that can adjust opening degrees of said air outlets (13, 14, 15, 43, 44, 45, 73, 74, 75) following movement thereof in said second direction.

11. An automotive air conditioner according to any one of claims 7 to 10, wherein said plate-like member (16, 46, 76) has rigidity in said second direction and a third direction crossing said first and second directions.

12. An automotive air conditioner according to any one of claims 7 to 11, wherein each of said crest portions (50, 80) has a hollow structure.

13. An automotive air conditioner according to any one of claims 7 to 12, wherein said plate-like member (16, 46, 76) serves as an air flow direction control member for controlling air flow directions at said air outlets (13, 14, 15, 43, 44, 45, 73, 74, 75), following movement thereof in said second direction.

14. An automotive air conditioner according to claim 13, wherein said plate-like member (16, 46, 76) has an opening (17, 47, 77) that influences the air flow directions at said air outlets (13, 14, 15, 43, 44, 45, 73, 74, 75).

15. An automotive air conditioner according to claim 13 or 14 , wherein said opening (17, 47, 77) serves as an exit of said space.

16. An automotive air conditioner according to any one of claims 13 to 15, wherein said plate-like member (16, 46, 76) has opposite ends that influence the air flow directions at said air outlets (13, 14, 15, 43, 44, 45, 73, 74, 75).

17. An automotive air conditioner according to any one of the preceding claims, wherein said guide (8, 18, 38, 48, 68, 78) has at least one curved (7, 17, 37, 47, 67, 77) portion that is curved in said first direction.

18. An automotive air conditioner according to claim 17, wherein said gear (12, 19, 42, 49, 72, 79) is disposed correspondingly to said curved portion (7, 37, 67).

19. An automotive air conditioner according to any one of the preceding claims, wherein said driving apparatus comprises a shaft (88) fixed to the centre of said gear (12, 19, 42, 49, 72, 79) and rotatably supported by said duct (1, 31, 61), a pinion gear (90) fixed to said shaft and a rack (91) engaging with said pinion gear.

20. An automotive air conditioner according to any one of claims 1 to 18, wherein said driving apparatus comprises a shaft (88) fixed to the centre of said gear (12, 19, 42, 49, 72, 79) and rotatably supported by said duct (1, 31, 61), a pinion gear (90) fixed to said shaft, and a fan-shaped gear (93) engaging with said pinion gear.

21. An automotive air conditioner according to any one of claims 1 to 18, wherein said driving apparatus comprises a shaft (88) fixed to the centre of said gear (12, 19, 42, 49, 72, 79) and rotatably supported by said duct (1, 31, 61) and a motor actuator (94) directly coupled to said shaft.

## Patentansprüche

1. Fahrzeug-Klimaanlage mit einem Kanal (1, 31, 61), der in sich einen Raum begrenzt, welcher sich in einer ersten Richtung erstreckt zum Gestatten des Strömens von Luft durch ihn hindurch, einer Führung (8, 18, 38, 48, 68, 78), die an dem Kanal befestigt ist und sich in einer zweiten Richtung erstreckt, welche die erste Richtung schneidet, und einem bewegbaren plattenartigen Bauteil (6, 16, 36, 46, 66, 76), das durch die Führung geführt wird und den Strom von Luft in dem Raum beeinflusst, wobei das plattenartige Bauteil Flexibilität in der ersten Richtung aufweist, wobei das plattenartige Bauteil eine erste und eine zweite Oberfläche aufweist, die einander in der ersten Richtung gegenüberliegen, die erste Oberfläche (6a, 36a, 46a, 66a, 76a) eine im wesentlichen flache Gestalt hat, während die zweite Oberfläche eine Mehrzahl von Kammabschnitten (9, 39, 50, 69, 80) aufweist, die sich in einer dritten Richtung erstrecken, welche die erste und zweite Richtung schneidet, und mit Zwischenräumen zwischen ihnen in der zweiten Richtung angeordnet sind und wobei das plattenartige Bauteil (6, 36, 66) Flexibilität an den Abschnitten zwischen den Kammabschnitten (9, 39, 69) aufweist,
**dadurch gekennzeichnet, dass** die Fahrzeug-Klimaanlage weiterhin eine Antriebsvorrichtung zum Bewegen des plattenartigen Bauteils in der zweiten Richtung aufweist, wobei die Antriebsvorrichtung aufweist:
Konkavabschnitte (10, 40, 51, 70, 81) und Konvexabschnitte (9, 39, 50, 69, 80), die durch die Kammabschnitte des plattenartigen Bauteils (6, 16, 36, 46, 66, 76) gebildet werden, die sich in der ersten Richtung gegenüberstehen, wobei die Konkavabschnitte und die Konvexabschnitte in regelmäßiger Weise aneinander in der zweiten Richtung angrenzen, und
ein Zahnrad (12, 19, 42, 49, 72, 79), das mit den Konkavabschnitten und den Konvexabschnitten in Eingriff steht und bei Rotation desselben die Konkavabschnitte und die Konvexabschnitte in der zweiten Richtung befördert.

2. Fahrzeug-Klimaanlage nach Anspruch 1, bei der der Raum mindestens zwei Luftstromdurchlässe (4, 5, 34, 35, 64, 65) aufweist, die parallel zueinander in der zweiten Richtung angeordnet sind, und das plattenartige Bauteil (6, 36, 66) das Verhältnis der Mengen an Luft, die durch die Luftstromdurchlässe strömen, einstellt.

3. Fahrzeug-Klimaanlage nach Anspruch 2, bei der die mindestens zwei Luftstromdurchlässe einen Heißluftdurchlass (4, 34, 64) und einen Kaltluftdurchlass (5, 35, 65) aufweisen, die aneinander in der zweiten Richtung angrenzen.

4. Fahrzeug-Klimaanlage nach Anspruch 2 oder 3, bei der das plattenartige Bauteil (6, 36, 66) Starrheit in der zweiten und dritten Richtung aufweist.

5. Fahrzeug-Klimaanlage nach einem der Anspruch 2 bis 4, bei der das plattenartige Bauteil (6, 36, 66) in der zweiten Richtung bewegt wird zum Einstellen der Öffnungsgrade der Luftstromdurchlässe.

6. Fahrzeug-Klimaanlage nach einem der vorangehenden Ansprüche, bei der jeder der Kammabschnitte (9, 39, 69) eine Hohlstruktur aufweist.

7. Fahrzeug-Klimaanlage nach Anspruch 1, bei der der Raum eine Mehrzahl von Luftauslässen (13, 14, 15, 43, 44, 45, 73, 74, 75) entsprechend den unterschiedlichen Luftaufbereitungsmodi aufweist, und das plattenartige Bauteil (16, 46, 76) die Mengen an Luft einstellt, die von den entsprechenden Luftauslässen ausgeblasen werden.

8. Fahrzeug-Klimaanlage nach Anspruch 7, bei der das plattenartige Bauteil (16, 46, 76) eine Öffnung (17, 47, 77) aufweist, die die Öffnungsgrade der Luftauslässe (13, 14, 15, 43, 44, 45, 73, 74, 75) aufgrund der Bewegung derselben in der zweiten Richtung einstellen kann.

9. Fahrzeug-Klimaanlage nach Anspruch 7 oder 8, bei der die Öffnung (17, 47, 77) als ein Ausgang des Raumes dient.

10. Fahrzeug-Klimaanlage nach einem der Ansprüche 7 bis 9, bei der das plattenartige Bauteil (16, 46, 76) gegenüberliegende Enden aufweist, die die Öffnungsgrade der Luftauslässe (13, 14, 15, 43, 44, 45, 73, 74, 75) aufgrund der Bewegung derselben in der zweiten Richtung einstellen können.

11. Fahrzeug-Klimaanlage nach einem der Ansprüche 7 bis 10, bei der das plattenartige Bauteil (16, 46, 76) Starrheit in der zweiten Richtung und einer dritten Richtung, die die erste und zweite Richtung schneidet, aufweist.

12. Fahrzeug-Klimaanlage nach einem der Ansprüche 7 bis 11, bei der jeder der Kammabschnitte (50, 80) eine Hohlstruktur aufweist.

13. Fahrzeug-Klimaanlage nach einem der Ansprüche 7 bis 12, bei der das plattenartige Bauteil (16, 46, 76) als ein Luftstromrichtungs-Steuerteil zum Steuern der Luftstromrichtungen an den Luftauslässen (13, 14, 15, 43, 44, 45, 73, 74, 75) aus der Bewegung desselben in der zweiten Richtung resultierend dient.

14. Fahrzeug-Klimaanlage nach Anspruch 13, bei der das plattenartige Bauteil (16, 46, 76) eine Öffnung (17, 47, 77) aufweist, die die Luftstromrichtungen an den Luftauslässen (13, 14, 15, 43, 44, 45, 73, 74, 75) beeinflusst.

15. Fahrzeug-Klimaanlage nach Anspruch 13 oder 14, bei der die Öffnung (17, 47, 77) als ein Ausgang des Raumes dient.

16. Fahrzeug-Klimaanlage nach einem der Ansprüche 13 bis 15, bei der das plattenartige Bauteil (16, 46, 76) gegenüberliegende Enden aufweist, die die Luftstromrichtungen an den Luftauslässen (13, 14, 15, 43, 44, 45, 73, 74, 75) beeinflussen.

17. Fahrzeug-Klimaanlage nach einem der vorangehenden Ansprüche, bei der die Führung (8, 18, 38, 48, 68, 78) mindestens einen gekrümmten (7, 17, 37, 47, 67, 77) Abschnitt aufweist, der in der ersten Richtung gekrümmt ist.

18. Fahrzeug-Klimaanlage nach Anspruch 17, bei der das Zahnrad (12, 19, 42, 49, 72, 79) entsprechend dem gekrümmten Abschnitt (7, 37, 67) angeordnet ist.

19. Fahrzeug-Klimaanlage nach einem der vorangehenden Ansprüche, bei der die Antriebsvorrichtung eine Welle (88) aufweist, die an der Mitte des Zahnrades (12, 19, 42, 49, 72, 79) befestigt ist und durch den Kanal (1, 31, 61), ein an der Welle befestigtes Ritzel (90) und eine Zahnstange (91), die mit dem Ritzel in Eingriff steht, drehbar gelagert ist.

20. Fahrzeug-Klimaanlage nach einem der Ansprüche 1 bis 18, bei der die Antriebsvorrichtung eine Welle (88) aufweist, die an der Mitte des Zahnrades (12, 19, 42, 49, 72, 79) befestigt ist und durch den Kanal (1, 31, 61), ein Ritzel (90), das an der Welle befestigt ist, und ein fächerförmiges Zahnrad (93), das mit dem Ritzel in Eingriff steht, drehbar gelagert ist.

21. Fahrzeug-Klimaanlage nach einem der Ansprüche 1 bis 18, bei der die Antriebsvorrichtung eine Welle (88) aufweist, die an der Mitte des Zahnrades (12, 19, 42, 49, 72, 79) befestigt ist und durch den Kanal (1, 31, 61) und einen Stellmotor (94), der direkt mit der Welle verbunden ist, drehbar gelagert ist.

## Revendications

1. Climatiseur d'automobile comprenant un conduit (1, 31, 61) définissant à l'intérieur de celui-ci un espace s'étendant dans une première direction pour permettre l'écoulement d'air à travers celui-ci, un guide (8, 18, 38, 48, 68, 78) fixé au conduit et s'étendant dans une seconde direction coupant la première direction, et un élément en forme de plaque mobile (6, 16, 36, 46, 66, 76) guidé et qui influence l'écoulement d'air dans l'espace ci-dessus, l'élément en forme de plaque étant doté de flexibilité dans la première direction, cet élément en forme de plaque présentant une première surface et une seconde surface venant l'une en face de l'autre dans la première direction, cet élément en forme de plaque présentant une première surface et une seconde surface venant l'une en face de l'autre dans la première direction, la première surface (6a, 36a, 46a, 66a, 76a) ayant une forme essentiellement plate tandis que la seconde surface comporte une pluralité de parties de crêtes (9, 39. 50, 63, 80) s'étendant dans une troisième direction coupant les première et seconde directions, ces parties de crêtes étant disposées à intervalles réguliers entre elles dans la seconde direction, et l'élément en forme de plaque (6, 36, 66) présentant de la flexibilité dans les parties comprises entre les parties de crêtes (9, 39, 69),
**caractérisé en ce que**
le climatiseur d'automobile comprend en outre un appareil d'entraînement pour déplacer l'élément en forme de plaque dans la seconde direction, cet appareil d'entraînement comprenant :
des parties concaves (10, 40, 51, 70, 81) et des parties convexes (9, 39, 50, 69, 80) formées par les parties de crêtes de l'élément en forme de plaque (6, 16, 36, 46, 66, 76) et venant en face les unes des autres dans la première direction, ces parties concaves et ces parties convexes étant régulièrement attenantes les unes aux autres dans la seconde direction, et
un engrenage (12, 19, 42, 49, 72, 79) venant en prise avec les parties concaves et les parties convexes pour les entraîner dans la seconde direction lorsqu'il tourne.

2. Climatiseur d'automobile selon la revendication 1,
**caractérisé en ce que**
l'espace intérieur du conduit comprend au moins deux passages d'écoulement d'air (4, 5, 34, 35, 64, 65) disposés parallèlement l'un à l'autre dans la seconde direction, et
l'élément en forme de plaque (6, 36. 66) règle le rapport des quantités d'air passant à travers les passages d'écoulement d'air.

3. Climatiseur d'automobile selon la revendication 2,
**caractérisé en ce que**
les au moins deux passages d'écoulement d'air comprennent un passage d'air chaud (4, 34, 64) et un passage d'air froid (5, 35, 65) attenants l'un à l'autre dans la seconde direction.

4. Climatiseur d'automobile selon l'une quelconque des revendications 2 ou 3,
**caractérisé en ce que**
l'élément en forme de plaque (6, 36, 66) est rigidifié dans les seconde et troisième directions.

5. Climatiseur d'automobile selon l'une quelconque des revendications 2 à 4,
**caractérisé en ce que**
l'élément en forme de plaque (6. 36, 66) est déplacé dans la seconde direction pour régler les degrés d'ouverture des passages d'écoulement d'air.

6. Climatiseur d'automobile selon l'une quelconque des revendications précédentes,
**caractérisé en ce que**
chacune des parties de crêtes (9, 39, 69) présente une structure creuse.

7. Climatiseur d'automobile selon la revendication 1,
**caractérisé en ce que**
l'espace intérieur du conduit comporte un certain nombre de sorties d'air (13, 14, 15, 43, 44. 45, 73, 74, 75) correspondant à différents modes de climatisation, et
l'élément en forme de plaque (16, 46, 76) règle les quantités d'air soufflées hors des sorties d'air respectives.

8. Climatiseur automobile selon la revendication 7,
**caractérisé en ce que**
l'élément en forme de plaque (16, 46, 76) comporte une ouverture (17, 47, 77) pour régler les degrés d'ouverture des sorties d'air (13, 14, 15, 43, 44, 45, 73, 74, 75) en suivant son mouvement dans la seconde direction.

9. Climatiseur d'automobile selon l'une quelconque des revendications 7 ou 8,
**caractérisé en ce que**
l'ouverture (17, 47, 77) sert de sortie de l'espace intérieur du conduit.

10. Climatiseur d'automobile selon l'une quelconque des revendications 7 à 9.
**caractérisé en ce que**
l'élément en forme de plaque (16, 46, 76) comporte des extrémités opposées pour régler les degrés d'ouverture des sorties d'air (13, 14, 15, 43, 44, 45, 73, 74, 75) en suivant son mouvement dans la seconde direction.

11. Climatiseur d'automobile selon l'une quelconque des revendications 7 à 10,
**caractérisé en ce que**
l'élément en forme de plaque (16, 46, 76) est rigidifié dans la seconde direction et dans une troisième direction coupant les première et seconde directions.

12. Climatiseur d'automobile selon l'une quelconque des revendications 7 à 11,
**caractérisé en ce que**
chacune des parties de crêtes (50, 80) présente une structure creuse.

13. Climatiseur d'automobile selon l'une quelconque des revendications 7 à 12,
**caractérisé en ce que**
l'élément en forme de plaque (16, 46, 76) sert d'élément pour commander les directions d'écoulement d'air à l'endroit des sorties d'air (13, 14, 15, 43, 44, 45, 73, 74, 75) en suivant son mouvement dans la seconde direction.

14. Climatiseur d'automobile selon la revendication 13,
**caractérisé en ce que**
l'élément en forme de plaque (16, 46, 76) comporte une ouverture (17, 47, 77) qui influence les directions d'écoulement d'air à l'endroit des sorties d'air (13, 14, 15, 43, 44. 45, 73, 74, 75).

15. Climatiseur d'automobile selon l'une quelconque des revendications 13 ou 14,
**caractérisé en ce que**
l'ouverture (17, 47, 77) sert de sortie de l'espace intérieur du conduit.

16. Climatiseur d'automobile selon l'une quelconque des revendications 13 à 15,
**caractérisé en ce que**
l'élément en forme de plaque (16, 46, 76) comporte des extrémités opposées qui influencent les directions d'écoulement d'air à l'endroit des sorties d'air (13, 14, 15, 43, 44, 45, 73, 74, 75).

17. Climatiseur d'automobile selon l'une quelconque des revendications précédentes,
**caractérisé en ce que**
le guide (8, 18, 38, 48, 68, 78) comporte au moins une partie courbée (7, 17, 37, 47, 67, 77) dans la première direction.

18. Climatiseur d'automobile selon la revendication 17.
**caractérisé en ce que**
l'engrenage (12, 19, 42, 49, 72, 79) est disposé en correspondance avec la partie courbe (7, 37, 67).

19. Climatiseur d'automobile selon l'une quelconque des revendications précédentes,
**caractérisé en ce que**
l'appareil d'entrainement comprend un arbre (88) fixé au centre de l'engrenage (12, 19, 42, 49, 72. 79) et supporté en rotation par le conduit (1, 31, 61), un pignon d'engrenage (90) fixé à l'arbre, et une crémaillère (91) venant en prise avec le pignon d'engrenage.

20. Climatiseur d'automobile selon l'une quelconque des revendications 1 à 18,
**caractérisé en ce que**
l'appareil d'entraînement comprend un arbre (88) fixé au centre de l'engrenage (12, 19, 42, 49, 72. 79) et supporté en rotation par le conduit (1, 31, 61), un pignon d'engrenage (90) fixé à l'arbre, et un engrenage en forme d'éventail (93) venant en prise avec le pignon d'engrenage.

21. Climatiseur d'automobile selon l'une quelconque des revendications 1 à 18,
**caractérisé en ce que**
l'appareil d'entraînement comprend un arbre (88) fixé au centre de l'engrenage (12, 19, 42, 49. 72, 79) et supporté en rotation par le conduit (1, 31, 61), ainsi qu'un actionneur de moteur (94) couplé directement à l'arbre.
